# EUROPÄISCHE PATENTSCHRIFT

(11) **EP 2 037 833 B1**
(45) Veröffentlichungstag und Bekanntmachung des Hinweises auf die Patenterteilung: **06.07.2016**
(21) Anmeldenummer: 07765181.8
(22) Anmeldetag: 11.07.2007
(51) Int. Cl.: A61C 8/00

(54) **HALTE- UND VERPACKUNGSVORRICHTUNG FÜR EIN ZAHNIMPLANTAT**
HOLDING AND PACKAGING DEVICE FOR A TOOTH IMPLANT
DISPOSITIF DE MAINTIEN ET D'EMBALLAGE POUR UN IMPLANT DENTAIRE

(30) Priorität: 12.07.2006 DE 102006033382
(43) Veröffentlichungstag der Anmeldung: 25.03.2009
(73) Patentinhaber: DENTSPLY Implants Manufacturing GmbH, 68229 Mannheim (DE)
(72) Erfinder: KACZOROWSKI, Heiko, 75378 Bad Liebenzell (DE); HERMANN, Ralph, 76199 Karlsruhe (DE)
(74) Vertreter: Schmitt, Meinrad
(86) Internationale Anmeldenummer: PCT/EP2007/006164
(87) Internationale Veröffentlichungsnummer: WO 2008/006570

(56) Entgegenhaltungen:
- EP-A- 1 447 056
- US-A1- 2004 112 781

## Beschreibung

Die Erfindung betrifft eine Zahnimplantat-Halte- und -Verpackungsvorrichtung gemäß den im Oberbegriff des Anspruchs 1 angegebenen Merkmalen.

Gemäß der US 2004/0112781 A1, auf welcher Offenbarung die zweiteilige Form des Anspruchs 1 basiert, enthält die Zahnimplantat-Halte- und -Verpackungsvorrichtung ein längliches zylinderförmiges Aufnahmeelement, das eine Zylinderwand und zumindest eine an der Zylinderwand angebrachte Stirnwand aufweist. Das Aufnahmeelement ist zweiteilig ausgebildet und enthält zum einen ein zylindrisches Schutzgehäuse und zum anderen einen die Stirnwand aufweisenden Halter, wobei die Stirnwand mittelbar über den Halter an der Zylinderwand angebracht ist. Das Aufnahmeelement enthält eine über die Länge der Zylinderwand sich erstreckende Längsöffnung, in welcher der Halter in Längsrichtung des Aufnahmeelements verschiebbar angeordnet ist. Der Halter enthält die Stirnwand mit einer Öffnung zur Aufnahme eines Zahnimplantats. Zum Einlegen und zum Herausnehmen des Zahnimplantats wird der Halter aus dem Schutzgehäuse herausgeschoben. Nach außen sich erstreckende Griffelemente sind nicht vorgesehen.

Ferner ist aus der EP 0 986 341 B1 ein Halteelement für ein Implantat und eine Ampulle zur Aufbewahrung des Implantats beschrieben. Die zylindrische Ampulle dient dazu, ein Dentalimplantat zu halten, so dass es in eine größere Verpackung eingebracht werden kann. Die Ampulle besitzt einen Zylindermantel, der eine Aussparung besitzt, durch die das Dentalimplantat in den vom Zylindermantel umgebenen Innenraum eingebracht werden kann. Um das Dentalimplantat in der Ampulle zu halten, wird ein spezielles Halteelement mit dem Dentalimplantat verbunden, und dieses Halteelement wird dann in eine Stirnwand der Ampulle in eine dort vorgesehene Öffnung eingesteckt.

Der Nachteil dieser Ampulle besteht unter anderem darin, dass das Handling des Dentalimplantats nicht optimal ist und dass ein zusätzliches Halteelement mit dem Dentalimplantat verbunden werden muss, um das Implantat in der Ampulle zu halten.

Allgemein besitzen Dentalimplantate eine empfindliche Oberfläche, die bei der Manipulation, dem Transport und der Verpackung nicht berührt werden darf. Die Implantate werden mit einem Einbringpfosten montiert, der an eine Handlingshilfe geschraubt oder geklemmt wird. Diese Handlingshilfe dient oft als Verschluss oder Verschlussstopfen eines Gläschens, das dann auch als primäre Sterilverpackung dient.

Allgemein besteht eine Aufgabe der vorliegenden Erfindung darin, das Handling eines Dentalimplantats und dessen Verpackung zu vereinfachen, wobei die Vereinfachung des Handlings nicht zu Lasten der Herstellungskosten gehen darf.

Die Lösung dieser Aufgabe erfolgt gemäß den im Anspruch 1 angegebenen Merkmalen.

Vorteilhafte Ausgestaltungen der Erfindung gehen aus den abhängigen Ansprüchen hervor.

Bei der vorgeschlagenen Halte- und Verpackungsvorrichtung sind zumindest zwei einander gegenüberliegend an der Zylinderwand angebrachte Griffelemente vorgesehen, die sich nach außen erstrecken, wobei die Zylinderwand aus einem elastischen Material gefertigt ist, so dass sich durch Aufbringen einer Kraft über die Griffelemente, die Öffnung in der Stirnwand aufweiten lässt, um ein Zahnimplantat einzulegen und herauszunehmen.

D.h. mit anderen Worten, dass das Zahnimplantat in dem zylinderförmigen Aufnahmeelement durch Klemmkraft gehalten wird, wobei diese Klemmkraft beispielsweise durch "Betätigen" der Griffelemente oder durch direkte Manipulation des Zahnimplantats reduziert werden kann, um das Zahnimplantat aus der Haltevorrichtung zu entnehmen. Die Zylinderwand ist folglich so gefertigt, dass sie sich etwas aufweiten lässt, um damit die Aufnahmeöffnung an der Stirnwand, in der das Dentalimplantat gehalten wird, zu vergrößern. Diese Manipulation ist möglich, ohne das Dentalimplantat zu berühren. Darüber hinaus lässt sich die Halte- und Verpackungsvorrichtung auch ohne weiteres auf einer ebenen Fläche ablegen, ohne dass das Dentalimplantat in Berührung mit dieser Fläche gelangt.

Aufgrund des einfachen Aufbaus der Halte- und Verpackungsvorrichtung ist eine Fertigung im Spritzgussverfahren möglich, so dass eine sehr kostengünstige Fertigung möglich wird.

In einer bevorzugten Weiterbildung umschließt die Zylinderwand im Querschnitt einen Winkel von mindestens 180° und ist die Längsöffnung in Umfangsrichtung zumindest so groß wie der Durchmesser des einzusetzenden Zahnimplantats.

Diese Maßnahme hat den Vorteil, dass die Zylinderwand einen großen Bereich umgibt, so dass das innerhalb der Zylinderwand liegende Dentalimplantat gut gegen Berührung etc. geschützt ist.

In einer bevorzugten Weiterbildung sind die Griffelemente in einer Ebene liegend an der Zylinderwand angeordnet.

Diese Ausgestaltung hat sich in der Praxis als besonders vorteilhaft herausgestellt. Insbesondere kann damit die Haltevorrichtung sehr sicher auf einer glatten Fläche abgelegt werden, ohne dass das Dentalimplantat die Oberfläche berührt.

In einer bevorzugten Weiterbildung ist die Öffnung in der Stirnwand kreissegmentförmig ausgebildet und zur Längsöffnung hin randoffen.

Diese Maßnahme hat den Vorteil, dass das Zahnimplantat leicht in die Öffnung eingelegt werden kann. Hierbei ist anzumerken, dass sich das Kreissegment bevorzugt über einen Winkel von mehr als 180° erstreckt, so dass der verbleibende Spalt kleiner ist als der Durchmesser der Öffnung.

In einer bevorzugten Weiterbildung ist die Öffnung koaxial zur Längsachse des Aufnahmeelements angeordnet.

Diese Maßnahme hat den Vorteil, dass einerseits eine gute Klemmung des Dentalimplantats erreichbar ist und andererseits der Abstand der Längsachse zu einer Auflagefläche so groß ist, dass das Dentalimplantat die Auflagefläche nicht berührt.

In einer bevorzugten Weiterbildung erstreckt sich ausgehend von der Öffnung ein gegenüber der Längsöffnung liegender Schlitz radial.

Diese Maßnahme hat den Vorteil, dass die Aufweitung der Öffnung zur Lösung der Klemmung des Dentalimplantats erleichtert wird.

In einer bevorzugten Weiterbildung ist das Aufnahmeelement aus einem elastischen Kunststoff, vorzugsweise einem biokompatiblen Kunststoff, gefertigt.

Dies hat den Vorteil, dass das Aufnahmeelement und folglich die gesamte Halte- und Verpackungsvorrichtung mit allen gängigen Sterilisationsverfahren (Strahlen, Gas, Dampf) behandelt werden kann. Darüber hinaus ist der Halter leicht herzustellen, beispielsweise mittels Kunststoffspritzguss. Ferner erzielt man durch Benutzung eines Kunststoffs die erforderliche Elastizität, die zur Aufweitung der Öffnung erforderlich ist.

Darüber hinaus ist es -im Gegensatz zu bisherigen Lösungen- möglich, die aus der primären Sterilverpackung herausgenommene Halte- und Verpackungsvorrichtung zusammen mit darin aufgenommenen dem Dentalimplantat erneut mit den üblichen Verfahren zu sterilisieren.

In einer bevorzugten Weiterbildung ist ein weiteres Griffelement vorgesehen, das zwischen den beiden anderen Griffelementen angeordnet ist. Bevorzugt liegen die Griffelemente in einem Winkel von 90° zueinander.

Mit Hilfe des dritten Griffelements wird die Handhabung der Haltevorrichtung weiter verbessert.

In einer bevorzugten Weiterbildung ist an den beiden Griffelementen jeweils ein Wandelement angebracht, das sich senkrecht zum Griffelement erstreckt und als Abstandselement dient.

D.h. mit anderen Worten, dass durch die beiden an den Griffelementen angebrachten Wandelemente der Abstand des eingelegten Dentalimplantats zu einer Auflagefläche weiter erhöht wird, so dass die Gefahr einer Berührung entsprechend reduziert wird. Darüber hinaus wird der Schutz des Dentalimplantats durch diese Wandelemente weiter verbessert.

In einer bevorzugten Weiterbildung ist die der Stirnwand gegenüberliegende Seite des Aufnahmeelements abgeflacht ausgebildet, um eine Standfläche zu bilden.

D.h. mit anderen Worten, dass die Halte- und Verpackungsvorrichtung damit auch so abgelegt werden kann, dass die Längsachse des Aufnahmeelements (und damit die Längsachse des Dentalimplantats) senkrecht zur Auflagefläche steht. Somit wird eine weitere Flexibilität bezüglich der Handhabung erreicht.

In einer bevorzugten Weiterbildung ist die Stirnwand in Form von zumindest zwei, vorzugsweise drei, Segmenten vorgesehen, die die Öffnung zumindest teilweise umgeben.

D.h. mit anderen Worten, dass die Stirnwand in einzelne radial zur Öffnung vorspringende Segmente aufgeteilt wird, die vorzugsweise nicht mehr miteinander verbunden sind, sondern alleine an einer Innenwand des Zylinders angebracht sind. Dies hat den Vorteil, dass die Elastizität zur Aufweitung der Öffnung weiter verbessert wird.

Bevorzugt ist die Stirnwand bzw. die Segmente in Längsrichtung nach Innen versetzt angeordnet.

Dies hat den Vorteil, dass das eingesetzte Zahnimplantat nicht übersteht, sondern vollständig innerhalb dem vom Zylinder umgebenden Raum liegt.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand von Ausführungsbeispielen mit Bezug auf die Zeichnung näher erläutert. Dabei zeigen:
- Fig. 1: drei perspektivische Darstellungen einer erfindungsgemäßen Halte- und Verpackungsvorrichtung gemäß einer ersten Ausführungsform der Erfindung;
- Fig. 2A, B: zwei unterschiedliche perspektivische Darstellungen der Halte- und Verpackungsvorrichtung gemäß Fig. 1;
- Fig. 3: eine perspektivische Darstellung einer Halte- und Verpackungsvorrichtung gemäß einer zweiten Ausführungsform;
- Fig. 4: eine perspektivische Ansicht einer Halte- und Verpackungsvorrichtung gemäß einer dritten Ausführungsform der Erfindung; und
- Fig. 5: eine perspektivische Ansicht einer Halte- und Verpackungsvorrichtung gemäß einer weiteren Ausführungsförm der Erfindung.

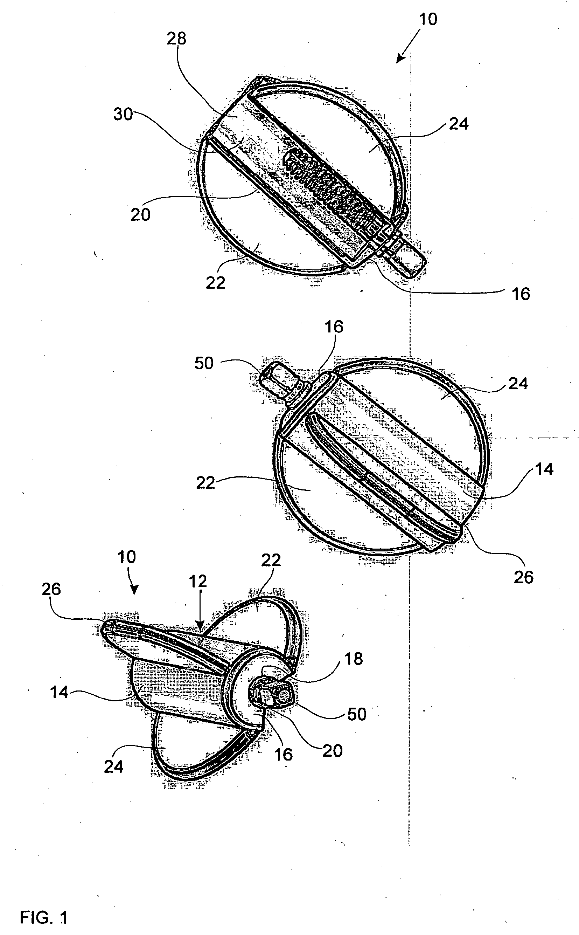

In Fig. 1 ist eine Halte- und Verpackungsvorrichtung (nachfolgend kurz Haltevorrichtung genannt) in drei unterschiedlichen Ansichten schematisch dargestellt und mit dem Bezugszeichen 10 gekennzeichnet. Diese Haltevorrichtung 10 dient dazu, ein Dental- bzw. Zahnimplantat aufzunehmen, so dass es anschließend steril verpackt werden kann. Als Verpackung kann beispielsweise eine Blisterverpackung dienen.

Die Haltevorrichtung 10 umfasst ein längliches zylindrisches Aufnahmeelement 12, das eine Zylinderwand 14 und eine Stirnwand 16 an einem Ende der Zylinderwand 14 aufweist. Die Zylinderwand 14 erstreckt sich über einen Winkel (im Querschnitt gesehen) von über 180°, die Zylinderwand 14 ist jedoch nicht in Umfangsrichtung geschlossen. Folglich entsteht eine Öffnung 20, die sich über die gesamte Länge der Zylinderwand 14 erstreckt. Diese Öffnung 20 ist in der oberen Ansicht von Fig. 1 zu erkennen.

Die Zylinderwand 14 bildet demnach - im Querschnitt - ein Kreissegment, wobei an dieser Stelle jedoch anzumerken ist, dass der Querschnitt auch andere Formen aufweisen kann. Die in Fig. 1 gezeigte Zylinderwand 14 kann - im Querschnitt - auch eckig ausgebildet sein. Die zylindrische Ausgestaltung hat sich jedoch als besonders vorteilhaft herausgestellt.

An einem Längsende der Zylinderwand 14 ist die Stirnwand 16 angebracht, die eine Öffnung 18 aufweiset, die koaxial zur Längsachse der Zylinderwand 14 liegt. Die Öffnung 18 ist in Richtung der Längsöffnung 20 randoffen ausgebildet, so dass ein Zahnimplantat 50 in die Öffnung hineingedrückt werden kann.

An der Zylinderwand 14 sind insgesamt drei Griffelemente 22, 24, 26 angebracht, die zueinander in einem Abstand von etwa 90° platziert sind. Folglich liegen die beiden äußeren Griffelemente 22, 24 in einer Ebene. Die Griffelemente 22 - 26 erstrecken sich in Längsrichtung über die gesamte Länge des Aufnahmeelements 12 und besitzen - in Draufsicht - eine Kreissegment-Form. Diese Form ist jedoch für die Erfindung nicht wesentlich, so dass andere Formen ebenfalls denkbar sind. An dieser Stelle sei noch angemerkt, dass die beiden Griffelemente nicht notwendigerweise in einer Ebene liegen müssen. Vielmehr könnten sie auch schräg zueinander verlaufen, so dass beispielsweise der Winkel zu dem dritten Griffelement 26 jeweils größer 90° ist.

Die in Fig. 1 gezeigte Haltevorrichtung 10 ist bevorzugt aus einem Material gefertigt, wobei es sich bei diesem Material bevorzugt um einen biokompatiblen Kunststoff mit einer gewissen Elastizität handelt. Die Haltevorrichtung 10 kann folglich im Spritzgussverfahren kostengünstig hergestellt werden. Bei dem gewählten Material sollte es sich um ein Material handeln, das sich leicht sterilisieren lässt, unabhängig davon, welches Sterilisationsverfahren eingesetzt wird.

In der oberen Darstellung von Fig. i ist zu erkennen, dass das Zahnimplantat innerhalb des von der Zylinderwand 14 gebildeten Aufnahmeraums 30 liegt und dabei nicht in Kontakt mit der umgebenden Wand kommt. Das Zahnimplantat 50 wird innerhalb des Aufnahmeraums 30 über einen Einbringpfosten gehalten, der einerseits mit dem Dentalimplantat verbunden ist und andererseits in die Öffnung 18 in der Stirnwand 16 eingesetzt wird. Die Öffnung 18 in der Stirnwand 16 ist dabei so gewählt, dass der Einbringpfosten des Zahnimplantats 50 sicher in der Öffnung 18 festgeklemmt wird. Das bedeutet mit anderen Worten, dass das Material der Zylinderwand 14 eine gewisse Elastizität aufweisen muss, um ein Aufweiten der Öffnung 18 in der Stirnwand 16 zu ermöglichen.

Die auf das Dentalimplantat bzw. den Einbringpfosten ausgeübte Klemmkraft lässt sich beispielsweise dadurch verringern, dass die beiden Griffelemente 22, 24, oder nur eines der beiden Griffelemente, mit einer Kraft beaufschlagt werden, die etwa in Richtung des dritten Griffelements geht. Eine solche Kraft bewirkt, dass sich die Zylinderwand 14 - im Querschnitt gesehen - etwas aufweitet, so dass die Öffnung 20 größer wird. Gleichzeitig vergrößert sich ebenfalls die Öffnung 18 in der Stirnwand 16, so dass das Dentalimplantat leicht aus der Öffnung herausgenommen werden kann. Gleiches gilt selbstverständlich auch im Falle des Einführens des Dentalimplantats in die Öffnung 18, das auch erleichtert wird, wenn auf zumindest eines der beiden Griffelemente 22, 24 eine Kraft zum Aufweiten der Öffnung 18 aufgebracht wird.

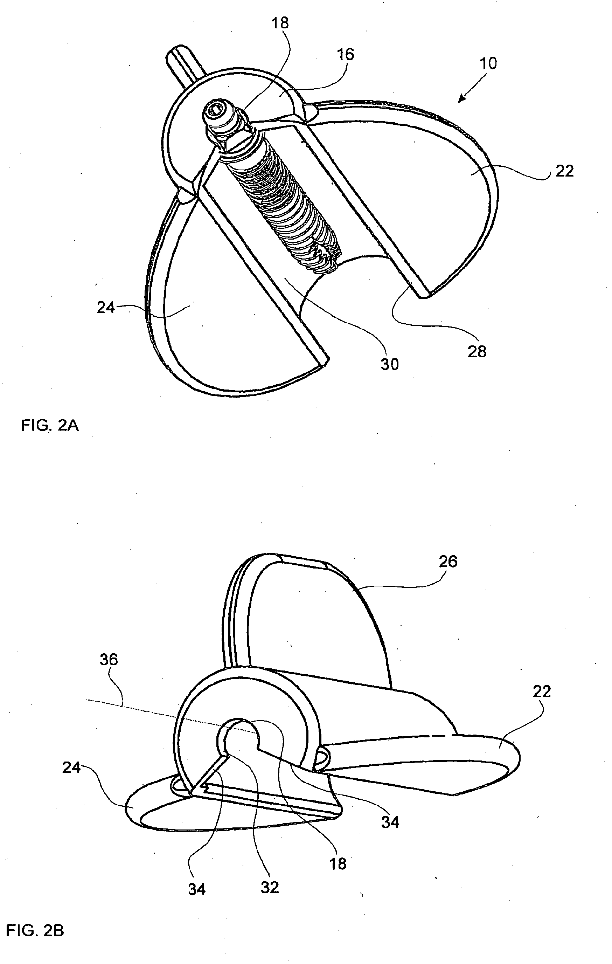

In Fig. 2A und 2B ist die zuvor im Detail erläuterte Haltevorrichtung 10 nochmals detailliert gezeigt. Gut zu erkennen ist hierbei die Stirnwand 16, in der eine zum unteren Ende hin randoffene Öffnung 18 vorgesehen ist. Diese Öffnung 18 liegt koaxial zu der Längsachse 36 beispielsweise der Zylinderwand 14. Die Öffnung 18 besitzt einen Rand 32, der sich kreissegmentförmig über einen Winkel von über 180° erstreckt und in eine Flanke 34 an beiden Seiten übergeht, die sich gerade zum Rand der Zylinderwand 14 erstreckt. Dies ist gut in Fig. 2B zu erkennen.

Im Gegensatz zu dem zumindest teilweise geschlossenen Längsende der Zylinderwand 14 ist das gegenüberliegende Längsende 28 offen gestaltet. Dort ist also keine Wand vorhanden, so dass die Elastizität der Zylinderwand 14 nicht eingeschränkt wird.

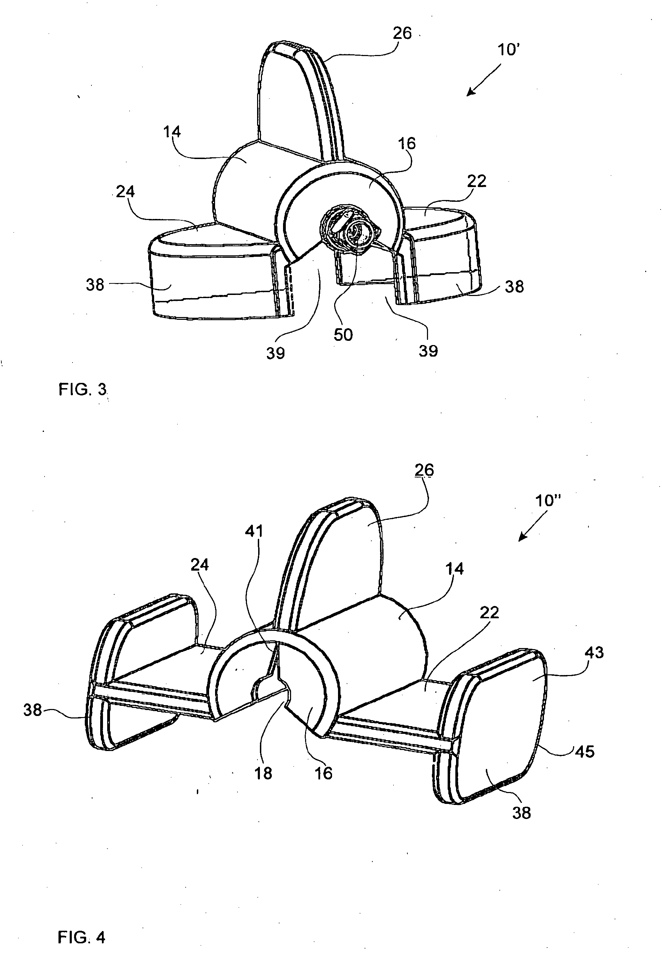

In Fig. 3 ist eine weitere Ausführungsform einer Haltevorrichtung 10 dargestellt und mit dem Bezugszeichen 10' gekennzeichnet. Diese Haltevorrichtung 10' entspricht im Wesentlichen der mit Bezug auf die Fig. 1 und 2 bereits beschriebenen Haltevorrichtung, so dass auf die mit gleichen Bezugszeichen gekennzeichneten Teile verzichtet werden kann.

Der einzige Unterschied zu der in Fig. 1 gezeigten Ausführung besteht darin, dass an die beiden äußeren Griffelemente 22, 24 jeweils eine Wand 38 angebracht ist, die sich im Wesentlichen senkrecht zum entsprechenden Griffelement 22, 24 erstreckt und entlang dem Rand des Griffelements 22, 24 verläuft. In Draufsicht gesehen haben die beiden Wände 38 eine Halbkreisform.

Beim Auflegen der Haltevorrichtung auf eine ebene Fläche liegen demnach nicht die beiden Griffelemente 22, 24 auf, sondern die Haltevorrichtung 10' wird von den beiden Wänden 38 beabstandet zur-Fläche gehalten.

Der Vorteil hierbei liegt insbesondere darin, dass eine unbeabsichtigte Berührung des im Aufnahmeraum 30 liegenden Dentalimplantats weiter reduziert wird.

In Fig. 4 ist schließlich eine weitere Ausgestaltung einer Haltevorrichtung dargestellt und mit dem Bezugszeichen 10" gekennzeichnet. Auch diese Haltevorrichtung 10" hat im Wesentlichen den gleichen Aufbau wie die Haltevorrichtung 10 gemäß Fig. 1 und 2. Aufgrund dessen wird nachfolgend nicht auf die mit gleichen Bezugszeichen gekennzeichneten Teile eingegangen werden.

Einer der Unterschiede zu der eingangs erläuterten Haltevorrichtung 10 besteht darin, dass die beiden Griffelemente 22, 24 - in Draufsicht - rechteckförmig ausgebildet sind und am Ende senkrecht dazu verlaufende Wände 38 vorgesehen sind. Diese beiden Wände 38 stehen nicht nur nach unten sondern auch nach oben gegenüber den entsprechenden Griffelementen 22 bzw. 24 vor. Griffelement 22 bzw. 24 und die jeweilige Wand 38 bilden folglich jeweils ein "T". Der in der Figur gezeigte Winkel von 90° zwischen Griffelement 22 bzw. 24 und der Wand 38 ist eine bevorzugte Ausgestaltung, jedoch kann der Winkel auch anders gewählt werden, falls die Anwendung dies erfordert.

Darüber hinaus weist die Haltevorrichtung 10" im Bereich der Öffnung 18 einen Schlitz 41 auf, der sich von der Öffnung 18 in radialer Richtung nach außen erstreckt, und zwar in Richtung des oberen Griffelements 26. Dieser Schlitz 41 ist dreieckförmig ausgebildet, so dass sich der Spalt in radialer Richtung verjüngt.

Dieser Schlitz 41 dient dazu, die Elastizität der Zylinderwand 14 zu vergrößern, so dass die Öffnung 18 leichter aufgeweitet werden kann. Um diese Öffnung 18 aufzuweiten, ist es lediglich erforderlich, die Wand 38 im oberen Bereich 43 mit einer zur Zylinderwand 14 gerichteten Kraft zu beaufschlagen. Des Weiteren ist es mit der in Fig. 4 gezeigten Ausgestaltung möglich, die Öffnung 18 im Durchmesser etwas zu -verringern, um damit die Klemmkraft auf ein eingesetztes Dentalimplantat 50 zu erhöhen. Dies kann dadurch erreicht werden, dass die beiden Wände 38 im unteren Bereich 45 mit einer Kraft beaufschlagt werden.

Auch die mit Bezug auf die Fig. 3 und 4 gezeigten Ausführungsformen sind bevorzugt aus einem biokompatiblen Kunststoff im Spritzgussverfahren hergestellt.

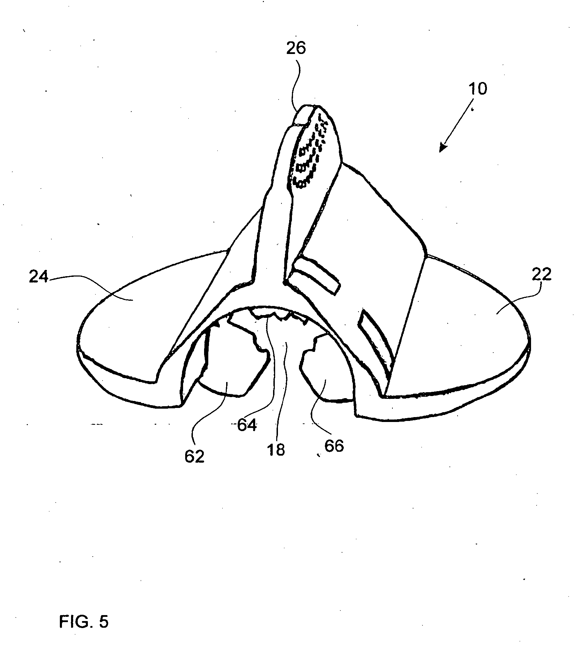

In Fig. 5 ist eine weitere Ausführungsform einer Haltevorrichtung 10 dargestellt, die im wesentlichen der in Fig. 1 gezeigten entspricht. Aus diesem Grund wird auf die entsprechenden Beschreibungspassagen verwiesen.

Ein Unterschied gegenüber der in Fig. 1 gezeigten Ausführungsform besteht darin, dass die Stirnwand 16 nicht mehr vorhanden ist. Stattdessen sind drei Haltewangen 62, 64, 66 vorgesehen, die in Umfangsrichtung (bzgl. der Längsöffnung 20) beabstandet sind und die Öffnung 18 zwischen sich aufspannen. In dieser Öffnung lässt sich -wie zuvor beschrieben- ein Implantat aufnehmen und halten. Zusätzlich zu der "Segmentierung" der Stirnwand in drei segmentartige Haltewangen 62, 64, 66 sind diese etwas nach Innen (in Längsrichtung gesehen) versetzt angeordnet. Dies ist deutlich in Fig. 5 zu erkennen. Das hat den Effekt, dass das Zahnimplantat 50 nicht mehr gegenüber der Stirnfläche der Haltevorrichtung übersteht, wie dies bspw. in der in Fig. 1 gezeigten Ausführung der Fall ist. Darüber hinaus wird durch die Segmentierung der Stirnwand in einzelne Haltewangen die Elastizität verbessert, so dass insbesondere das Herausnehmen des Zahnimplantats erleichtert wird.

Allen gezeigten Haltevorrichtungen 10 ist gemein, dass sie ein eingesetztes Dentalimplantat rundherum schützen, so dass das Dentalimplantat keine Berührung mit der Haltevorrichtung hat und es auch während des Handlings zu keiner Berührung und Verletzung der Oberfläche des Dentalimplantats kommt. Das Dentalimplantat kann in der Haltevorrichtung 10 im Operationsbereich abgelegt werden, ohne dass das Dentalimplantat mit der Auflage in Kontakt kommt. Das Dentalimplantat kann mit der Haltevorrichtung 10 im Operationsbereich manipuliert werden, ohne dass es berührt wird.

Die Entnahme des Dentalimplantats aus der Haltevorrichtung 10 geschieht mit einem dafür gängigen Werkzeug, wobei das Dentalimplantat mit der Haltevorrichtung sicher und stabil gehalten werden kann.

Die Entnahme des Dentalimplantats geschieht durch Überwindung der Klemmung bzw. bei der in Fig. 4 gezeigten Ausführungsform durch Aufdrücken des Klemmbereichs.

## Patentansprüche

1. Zahnimplantat-Halte- und -Verpackungsvorrichtung mit einem länglichen zylinder-förmigen Aufnahmeelement (12), das eine Zylinderwand (14) und zumindest eine an der Zylinderwand angebrachte Stirnwand (16) aufweiset, wobei die Stirnwand (16) eine Öffnung (18) zur Aufnahme eines Zahnimplantats (50) und die Zylinderwand in diesem Bereich eine sich über die gesamte Länge der Zylinderwand erstreckende Längsöffnung (20) aufweist,
**dadurch gekennzeichnet, dass** zumindest zwei einander gegenüberliegend an der Zylinderwand (14) angebrachte Griffelemente (22, 24) vorgesehen sind, die sich nach außen erstrecken,
und dass die Zylinderwand (14) aus einem elastischen Material gefertigt ist, so dass sich durch Aufbringen einer Kraft auf die Griffelemente (22, 24) die Öffnung (18) in der Stirnwand (16) aufweiten lässt, um ein Zahnimplantat einzulegen und herauszunehmen.

2. Halte- und Verpackungsvorrichtung nach Anspruch 1, **dadurch gekennzeichnet, dass** die Zylinderwand (14) im Querschnitt einen Winkel von mindestens 180° umschließt und die Längsöffnung (20) in Umfangsrichtung zumindest so groß wie der Durchmesser des einzusetzenden Zahnimplantats ist.

3. Halte- und Verpackungsvorrichtung nach Anspruch 1 oder 2, **dadurch gekennzeichnet, dass** die Griffelemente (22, 24) in einer Ebene liegend an der Zylinderwand angeordnet sind.

4. Halte- und Verpackungsvorrichtung nach einem der Ansprüche 1 bis 3, **dadurch gekennzeichnet, dass** die Öffnung (18) in der Stirnwand (16) kreissegmentförmig ausgebildet ist und zur Längsöffnung (20) hin randoffen ist.

5. Halte- und Verpackungsvorrichtung nach Anspruch 4, **dadurch gekennzeichnet, dass** die Öffnung (18) koaxial zur Längsachse (36) des Aufnahmeelements (12) angeordnet ist.

6. Halte- und Verpackungsvorrichtung nach Anspruch 4 oder 5, **dadurch gekennzeichnet, dass** sich ausgehend von der Öffnung (18) ein gegenüber der Längsöffnung (20) liegender Schlitz (41) radial erstreckt.

7. Halte- und Verpackungsvorrichtung nach einem der vorhergehenden Ansprüche, **dadurch gekennzeichnet, dass** das Aufnahmeelement (12) aus einem elastischen Kunststoff, vorzugsweise einem biokompatiblen Kunststoff, gefertigt ist.

8. Halte- und Verpackungsvorrichtung nach einem der vorhergehenden Ansprüche, **dadurch gekennzeichnet, dass** ein weiteres-Griffelement (26) vorgesehen ist, das zwischen den beiden anderen Griffelementen (22, 24) angeordnet ist.

9. Halte- und Verpackungsvorrichtung nach einem der vorhergehenden Ansprüche, **dadurch gekennzeichnet, dass** an den beiden Griffelementen (22, 24) jeweils ein Wandelement (38) angebracht ist, das sich senkrecht zum Griffelement erstreckt und als Abstandselement dient.

10. Halte- und Verpackungsvorrichtung nach einem der vorhergehenden Ansprüche, **dadurch gekennzeichnet, dass** die der Stirnwand (16) gegenüberliegende Seite des Aufnahmeelements (12) abgeflacht ausgebildet ist, um eine Standfläche zu bilden.

11. Halte- und Verpackungsvorrichtung nach einem der vorhergehenden Ansprüche, **dadurch gekennzeichnet, dass** die Stirnwand (16) in Form von zumindest zwei Segmenten (62,64,66) vorgesehen ist, die die Öffnung (18) zumindest teilweise umgeben.

12. Halte- und Verpackungsvorrichtung nach Anspruch 11, **dadurch gekennzeichnet, dass** drei Segmente (62,64,66) vorgesehen sind, die gleichmäßig über den Innenumfang der Längsöffnung (20) beabstandet angeordnet sind.

13. Halte- und Verpackungsvorrichtung nach einem der vorhergehenden Ansprüche, **dadurch gekennzeichnet, dass** die Stirnwand (16) in Längsrichtung nach Innen zurückversetzt angeordnet ist.

## Claims

1. A holding and packaging device for a tooth implant, having an elongate cylindrical receiving element (12) which has a cylinder wall (14) and at least one end wall (16) mounted on the cylinder wall, wherein the end wall (16) has an opening (18) for receiving a tooth implant (50), and the cylinder wall has a longitudinal opening (20) which extends over the entire length of the cylinder wall in this region,
**characterized in that** at least two outwardly extending grip elements (22, 24) are provided which are mounted opposite to each other on the cylinder wall (14),
and **in that** the cylinder wall (14) is produced from an elastic material such that, by applying a force to the grip elements (22, 24), the opening (18) in the end wall (16) can be widened in order to introduce and remove a tooth implant.

2. The holding and packaging device as claimed in claim 1, **characterized in that** the cross section of the cylinder wall (14) encloses an angle of at least 180° and in the circumferential direction, the longitudinal opening (20) is at least the same size as the diameter of the tooth implant which is to be inserted.

3. The holding and packaging device as claimed in claim 1 or claim 2, **characterized in that** the grip elements (22, 24) are disposed in one plane on the cylinder wall.

4. The holding and packaging device as claimed in one of claims 1 to 3, **characterized in that** the opening (18) in the end wall (16) is configured in the shape of a circular segment and is open at the edge towards the longitudinal opening (20).

5. The holding and packaging device as claimed in claim 4, **characterized in that** the opening (18) is coaxial with the longitudinal axis (36) of the receiving element (12).

6. The holding and packaging device as claimed in claim 4 or claim 5, **characterized in that** a slot (41) positioned opposite the longitudinal opening (20) extends radially from the opening (18).

7. The holding and packaging device as claimed in one of the preceding claims, **characterized in that** the receiving element (12) is produced from an elastic plastic, preferably from a biocompatible plastic.

8. The holding and packaging device as claimed in one of the preceding claims; **characterized in that** a further grip element (26) is provided which is disposed between the other two grip elements (22, 24).

9. The holding and packaging device as claimed in one of the preceding claims, **characterized in that** a respective wall element (38) is mounted on the two grip elements (22, 24), said wall element extending perpendicularly with respect to the grip element and acting as a spacer element.

10. The holding and packaging device as claimed in one of the preceding claims, **characterized in that** the side of the receiving element (12) which is opposite the end wall (16) is flattened in order to form a standing surface.

11. The holding and packaging device as claimed in one of the preceding claims, **characterized in that** the end wall (16) is in the form of at least two segments (62, 64, 66) which at least partially surround the opening (18).

12. The holding and packaging device as claimed in claim 11, **characterized in that** three segments (62, 64, 66) are provided which are uniformly spaced apart about the inner circumference of the longitudinal opening (20).

13. The holding and packaging device as claimed in one of the preceding claims, **characterized in that** the end wall (16) is set back inwardly in the longitudinal direction.

## Revendications

1. Dispositif de maintien et d'emballage d'un implant dentaire, comportant un élément récepteur oblong de forme cylindrique (12) qui présente une paroi cylindrique (14) et au moins une paroi frontale installée au niveau de la paroi cylindrique (16), la paroi frontale (16) présentant une ouverture (18) destinée à recevoir un implant dentaire (50) et la paroi cylindrique présentant dans cette zone une ouverture longitudinale s'étendant sur toute la longueur de la paroi cylindrique (20),
**caractérisé en ce qu'**il est prévu au moins deux éléments de préhension (22, 24) installés opposés de l'un à l'autre sur la paroi cylindrique (14) et qui s'étendent vers l'extérieur
et que la paroi cylindrique (14) est fabriquée à partir d'un matériau élastique de manière à ce que, par application d'une force sur les éléments de préhension (22, 24), l'ouverture (18) de la paroi cylindrique (16) s'élargisse pour insérer et sortir un implant dentaire.

2. Dispositif de maintien et d'emballage selon la revendication 1, **caractérisé en ce que** la paroi cylindrique (14) circonscrit en section transversale un angle d'au moins 180° et que l'ouverture longitudinale (20) est dans le sens circonférentiel au moins aussi grande que le diamètre de l'implant dentaire à insérer.

3. Dispositif de maintien et d'emballage selon la revendication 1 ou 2, **caractérisé en ce que** les éléments de préhension (22, 24) sont disposés dans un plan reposant sur la paroi cylindrique.

4. Dispositif de maintien et d'emballage selon une des revendications 1 à 3, **caractérisé en ce que** l'ouverture (18) de la paroi cylindrique (16) est réalisée en forme de segment de cercle et s'ouvre en direction de l'ouverture longitudinale (20).

5. Dispositif de maintien et d'emballage selon la revendication 4, **caractérisé en ce que** l'ouverture (18) est disposée coaxialement par rapport à l'axe longitudinal (36) de l'élément récepteur (12).

6. Dispositif de maintien et d'emballage selon la revendication 4 ou 5, **caractérisé en ce qu'**une fente (41) se trouvant à l'opposé de l'ouverture longitudinale (20) s'étend radialement en partant de l'ouverture (18).

7. Dispositif de maintien et d'emballage selon une des revendications précédentes, **caractérisé en ce que** l'élément récepteur (12) est fabriqué à partir d'un plastique élastique, de préférence un plastique biocompatible.

8. Dispositif de maintien et d'emballage selon une des revendications précédentes, **caractérisé en ce qu'**il est prévu un autre élément de préhension (26) qui est disposé entre les deux autres éléments de préhension (22, 24).

9. Dispositif de maintien et d'emballage selon une des revendications précédentes, **caractérisé en ce qu'**est installé au niveau des deux éléments de préhension (22, 24) respectivement un élément de paroi (38) qui s'étend verticalement vers l'élément de préhension et sert l'élément d'espacement.

10. Dispositif de maintien et d'emballage selon une des revendications précédentes, **caractérisé en ce que** la face opposée à la paroi frontale (16) de l'élément récepteur (12) a une conformation aplatie pour constituer une surface d'appui.

11. Dispositif de maintien et d'emballage selon une des revendications précédentes, **caractérisé en ce que** la paroi frontale (16) est prévue sous forme d'au moins deux segments (62, 64, 66) qui entourent au moins partiellement l'ouverture (18).

12. Dispositif de maintien et d'emballage selon la revendication 11, **caractérisé en ce qu'**il est prévu trois segments (62, 64, 66) qui sont disposés régulièrement espacés sur la circonférence interne de l'ouverture longitudinale (20).

13. Dispositif de maintien et d'emballage selon une des revendications précédentes, **caractérisé en ce que** la paroi frontale (16) est disposée en retrait vers l'intérieur dans le sens longitudinal.
